(19) Europäisches Patentamt
European Patent Office
Office européen des brevets

(11) Veröffentlichungsnummer: **0 079 000**
**B1**

# (12) EUROPÄISCHE PATENTSCHRIFT

(45) Veröffentlichungstag der Patentschrift: **15.01.86**

(51) Int. Cl.[4]: **C 08 F 297/08**

(21) Anmeldenummer: **82109971.0**

(22) Anmeldetag: **28.10.82**

## (54) Verfahren zum Herstellen von Propylen-Ethylen-Polymerisaten vom Typ der sogenannten Block-Copolymerisate.

(30) Priorität: **07.11.81 DE 3144312**

(43) Veröffentlichungstag der Anmeldung: **18.05.83 Patentblatt 83/20**

(45) Bekanntmachung des Hinweises auf die Patenterteilung: **15.01.86 Patentblatt 86/3**

(84) Benannte Vertragsstaaten: **AT BE DE FR GB IT NL**

(56) Entgegenhaltungen:
**EP-A-0 040 330**
**DE-A-3 018 113**
**DE-A-3 020 863**
**DE-A-3 021 296**
**GB-A-1 032 945**
**US-A-3 977 997**
**US-A-4 154 699**

(73) Patentinhaber: **BASF Aktiengesellschaft, Carl-Bosch- Strasse 38, D-6700 Ludwigshafen (DE)**

(72) Erfinder: **Jaggard, James F. R., Dr., Bordollo Ring 21, D-6718 Gruenstadt (DE)**
Erfinder: **Schweier, Guenther, Dr., Friedrich-Pietsch- Strasse 14, D-6701 Friedelsheim (DE)**
Erfinder: **Klaerner, Peter, Dr., Hauptstrasse 62, D-6719 Battenberg (DE)**

**EP 0 079 000 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung liegt im Rahmen eines Verfahrens zum Herstellen von Propylen-Ethylen-Polymerisaten vom Typ der sogenannten "Block-Copolymerisate", wobei man jeweils in einem bewegten Bett, insbesondere einem bewegten Festbett, aus kleinteiligem Polymerisat und in Abwesenheit eines flüssigen Reaktionsmediums aus der Gasphase heraus zunächst

(I) in einer ersten Polymerisationszone bei einer Temperatur von 60 bis 90, insbesondere 65 bis 87°C Propylen bei einem Propylen-Druck von 22 bis 40, insbesondere 23 bis 34 bar durch Zufuhr eines Ziegler-Natta-Katalysatorsystems aus

(1) einer Titan-III-Komponente,

(2) einer Dialkylaluminiumchlorid-Komponente mit jeweils 1 bis 8, insbesondere 2 bis 4 Kohlenstoffatome aufweisenden Alkylgruppen sowie

(3) — gegebenenfalls — einer weiteren Katalysator-Komponente

homopolymerisiert und dann

(II) in einer zweiten Polymerisationszone bei einer Temperatur von 30 bis 70, insbesondere 40 bis 60°C ein Gemisch aus Propylen und Ethylen bei einem Propylen-Druck von 8 bis 20, insbesondere 10 bis 16 bar und einem Ethylen-Druck, der einen Gehalt an einpolymerisiertem Ethylen im Gesamtpolymerisat von 1 bis 30, insbesondere 5 bis 20 Gewichtsprozent ergibt, durch Zufuhr des in der ersten Polymerisationszone erhaltenen Reaktionsguts dem darin vorliegenden Propylen-Homopolymerisat hinzu polymerisiert, mit den Maßgaben, daß (i) das Atomverhältnis Titan aus der Titan-III-Komponente (1): Aluminium aus der Dialkylaluminiumchlorid-Komponente (2) im Bereich von 1:1 bis 1:20, insbesondere 1:2 bis 1:15 liegt, (ii) der Gesamt-Druck in der ersten Polymerisationszone um 2 bis 35, insbesondere 8 bis 25 bar größer ist als der Gesamt-Druck in der zweiten Polymerisationszone und (iii) in der ersten Polymerisationszone 60 bis 99, insbesondere 75 bis 95 Gewichtsprozent und in der zweiten Polymerisationszone der Rest des Gesamtpolymerisats, erzeugt werden.

Verfahren dieser Gattung sind bekannt und haben sich in der Technik mit Erfolg eingeführt, wobei als Prototyp für den vorliegenden Fall das aus der GB-PS 1,032,945 bekanntgewordene Verfahren genannt werden kann.

Ein gewisser Nachteil der bekanntgewordenen Verfahren der in Rede stehenden Gattung ist, daß die Morphologie der Polymerisate, insbesondere ihre Rieselfähigkeit, noch zu wünschen übrig läßt; — was vor allem dann gilt, wenn man in der zweiten Polymerisationszone mit relativ hohen Konzentrationen an Ethylen und/oder bei relativ hohen Temperaturen und/oder mit relativ hohen Drücken arbeitet.

Hier setzt die Aufgabenstellung an, die zur vorliegenden Erfindung geführt hat: Ein Verfahren der eingangs definierten Art aufzuzeigen, das mit dem vorerwähnten Nachteil erheblich weniger oder nicht mehr belastet ist.

Es wurde gefunden, daß die gestellte Aufgabe gelöst werden kann, wenn man im Rahmen dieses Verfahrens ein Ziegler-Natta-Katalysatorsystem einsetzt, dessen Titan-III-Komponente (1) eine bestimmte — insbesondere durch eine spezielle chemische Nachbehandlung geprägte — Weiterentwicklung solcher Titan-III-Komponenten (1) ist, wie sie in den US-PS 4,154,699 sowie 3,977,997 vorschattiert sind.

Gegenstand der vorliegenden Erfindung ist dementsprechend ein Verfahren zum Herstellen von Propylen-Ethylen-Polymerisaten vom Typ der sogenannten "Block-Copolymerisate", wobei man jeweils in einem bewegten Bett, insbesondere einem bewegten Festbett, aus kleinteiligem Polymerisat und in Abwesenheit eines flüssigen Reaktionsmediums aus der Gasphase heraus zunächst

(I) in einer ersten Polymerisationszone bei einer Temperatur von 60 bis 90, insbesondere 65 bis 87°C Propylen bei einem Propylen-Druck von 22 bis 40, insbesondere 23 bis 34 bar durch Zufuhr eines Ziegler-Natta-Katalysatorsystems aus

(1) einer Titan-III-Komponente,

(2) einer Dialkylaluminiumchlorid-Komponente mit jeweils 1 bis 8, insbesondere 2 bis 4 Kohlenstoffatome aufweisenden Alkylgruppen sowie

(3) — gegebenenfalls — einer weiteren Katalysator-Komponente

homopolymerisiert und dann

(II) in einer zweiten Polymerisationszone bei einer Temperatur von 30 bis 70, insbesondere 40 bis 60°C ein Gemisch aus Propylen und Ethylen bei einem Propylen-Druck von 8 bis 20, insbesondere 10 bis 16 bar und einem Ethylen-Druck, der einen Gehalt an einpolymerisiertem Ethylen im Gesamtpolymerisat von 1 bis 30, insbesondere 5 bis 20 Gewichtsprozent ergibt, durch Zufuhr des in der ersten Polymerisationszone erhaltenen Reaktionsguts dem darin vorliegenden Propylen-Homopolymerisat hinzu polymerisiert,

mit den Maßgaben, daß (i) das Atomverhältnis Titan aus der Titan-III-Komponente (1): Aluminium aus der Dialkylaluminiumchlorid-Komponente (2) im Bereich von 1:1 vis 1:20, insbesondere 1:2 bis 1:15 liegt, (ii) der Gesamt-Druck in der ersten Polymerisationszone um 2 bis 35, insbesondere 8 bis 25 bar größer ist als der Gesamt-Druck in der zweiten Polymerisationszone und (iii) in der ersten Polymerisationszone 60 bis 99, insbesondere 75 bis 95 Gewichtsprozent und in der zweiten Polymerisationszone der Rest des Gesamtpolymerisats, erzeugt werden.

Das erfindungsgemäße Verfahren ist *dadurch gekennzeichnet,* daß im Ziegler-Natta-Katalysatorsystem eine Titan-III-Komponente (1) eingesetzt wird, zu deren Herstellung man (1.1) eine Titan enthaltende Verbindung (a) der Formel

$TiCl_3 \cdot nAlCl_3$,

worin n für eine Zahl im Bereich von 0,01 bis 1, insbesondere von 0,1 bis 0,4 steht, und

(1.2) einen Elektronendonator (b), bestehend aus ($b_1$) einem Ester, der insgesamt 2 bis 34,

insbesondere 2 bis 18 Kohlenstoffatome enthält und die Formel

$R^1$-O-CO-$R^2$ oder
$R^1$-O-CO-C=CH
$R^2R^2$

hat, worin stehen

$R^1$ für (I) eine 1 bis 16, insbesondere 1 bis 8 Kohlenstoffatome aufweisende Alkylgruppe oder (II) eine insgesamt 7 bis 23, insbesondere 7 bis 14 Kohlenstoffatome aufweisende Phenylalkylgruppe, wobei bis zu 5 Wasserstoffatome des Phenylrests durch 1 bis 4 Kohlenstoffatome aufweisende Alkylgruppen substituiert sein können,

$R^2$ für (I) Wasserstoff, (II) eine 1 bis 18, insbesondere 2 bis 12 Kohlenstoffatome aufweisende Alkylgruppe, (III) eine insgesamt 7 bis 23, insbesondere 7 bis 14 Kohlenstoffatome aufweisende Phenylalkylgruppe, wobei bis zu 5 Wasserstoffatome des Phenylrests durch 1 bis 4 Kohlenstoffatome aufweisende Alkylgruppen substituiert sein können, (IV) eine Phenylgruppe oder (V) eine insgesamt 7 bis 23, insbesondere 7 bis 14 Kohlenstoffatome aufweisende Alkylphenylgruppe, wobei bis zu 5 Wasserstoffatome des Phenylrests durch 1 bis 4 Kohlenstoffatome aufweisende Alkylgruppen substituiert sein können, oder

($b_2$) einer Phosphor enthaltenden Verbindung der Formel

$O_mPR^3_3$,

worin stehen

m für O oder 1,

$R^3$ für $R^4$, $OR^4$ oder $NR^4_2$ und

$R^4$ für einen nicht mehr als 24, insbesondere nicht mehr als 8 Kohlenstoffatome aufweisenden Alkyl-, Aryl-, Alkaryl- oder Aralkylrest,

einer Mahlbehandlung unterzieht, derart, daß man

(A) mit einer Kugelschwingmühle arbeitet, die eine Mahlbeschleunigung von 30 bis 80, insbesondere von 45 bis 55 m · sec $^{-2}$ hat,

(B) die Mühle zunächst mit der Titan enthaltenden Verbindung (a) beschickt und — gegebenenfalls — bei einer Temperatur von —50 bis +100, insbesondere —30 bis +50°C über eine Zeitspanne von 0,5 bis 100, insbesondere 2 bis 20 Stunden in Abwesenheit von Verdünnungsmitteln betreibt, dann

(C) unter Mahlen bei einer Temperatur des Mahlgutes von —50 bis +80, insbesondere von —30 bis +60°C die einem Molverhältnis Titan in der Titan enthaltenden Verbindung (a): Elektronendonator (b) von 1:0,01 bis 1:1,5, insbesondere von 1:0,1 bis 1:0,7 entsprechende Menge des Elektronendonators (b) mit einer Geschwindigkeit von 0,01 bis 200, insbesondere von 1 bis 80 ml/Min pro 2,5 kg Titan enthaltende Verbindung (a) kontinuierlich oder in kleinen Portionen und in Abwesenheit von Verdünnungsmitteln zugibt, daraufhin

(D) unter Mahlen das Mahlgut über eine Zeitspanne von 1 bis 120, insbesondere von 5 bis 70 Stunden auf einer Temperatur von +15 bis +100, insbesondere von +20 bis +90°C hält, hierauf

(E) — gegebenenfalls — das gemäß (D) erhaltene Produkt über eine Zeitspanne von 0,5 bis 60, insbesondere von 2 bis 30 Minuten bei einer Temperatur von —50 bis +5, insbesondere von —40 bis 0°C in Abwesenheit von Verdünnungsmitteln weitervermahlt, sodann

(F) — gegebenenfalls und vorteilhafterweise — das gemäß (D) oder (E) erhaltene Produkt ohne es zu mahlen über eine Zeitspanne von 0,25 bis 300, insbesondere 2 bis 150 Std. auf einer Temperatur von +20 bis +150, insbesondere +45 bis +100°C hält, danach

(G) — gegebenenfalls — das gemäß (F) erhaltene Produkt über eine Zeitspanne von 0,5 bis 60, insbesondere 2 bis 30 Minuten bei einer Temperatur von —50 bis +5, insbesondere von —40 bis 0°C in Abwesenheit von Verdünnungsmitteln nachvermahlt, dann

(H) eine Suspension herstellt aus

($H_1$) 1 Gew.-Teil des gemäß (D), (E), (F) oder (G) erhaltenen Produkts,

($H_2$) 0,5 bis 20, insbesondere 0,7 bis 2 Gew.-Teilen eines unter Normalbedingungen flüssigen und unterhalb von 150, insbesondere unterhalb von 100°C siedenden Kohlenwasserstoffs (c), sowie

($H_3$) einer Sauerstoff enthaltenden Verbindung (d), bestehend aus

($d_1$) einem Ether, der insgesamt 4 bis 30, insbesondere 6 bis 16 Kohlenstoffatome enthält und die Formel

$R^5$-O-$R^6$

hat, worin $R^5$ und $R^6$ gleich oder verschieden sind und stehen für (I) eine 1 bis 15, insbesondere 3 bis 8 Kohlenstoffatome aufweisende Alkylgruppe, (II) eine Phenylgruppe oder (III) eine insgesamt 7 bis 14, insbesondere 7 bis 10 Kohlenstoffatome aufweisende Alkylphenylgruppe, und/oder

($d_2$) einem Ester, der insgesamt 2 bis 34, insbesondere 2 bis 14 Kohlenstoffatome enthält und die Formel

$R^7$-O-CO-$R^8$ bzw.
$R^7$-O-CO-C=CH
$R^8$ $R^8$

hat, worin stehen

$R^7$ für (I) eine 1 bis 8, insbesondere 1 bis 4 Kohlenstoffatome aufweisende Alkylgruppe, (II) eine Phenylgruppe oder (III) eine insgesamt 7 bis 14, insbesondere 7 bis 10 Kohlenstoffatome auweisende Phenylalkylgruppe,

$R^8$ für (I) Wasserstoff, (II) eine 1 bis 12, insbesondere 1 bis 9 Kohlenstoffatome aufweisende Alkylgruppe, (III) eine insgesamt 7 bis 14, insbesondere 7 bis 10 Kohlenstoffatome aufweisende Phenylalkylgruppe, wobei 1 Wasserstoffatom des Phenylrests durch eine Alkylgruppe substituiert sein kann, (IV) eine Phenylgruppe oder (V) eine insgesamt 7 bis 14, insbesondere 7 bis 10 Kohlenstoffatome aufweisende Alkylgruppe,

in einer solchen Menge, daß sich ein Molverhältnis Titan aus der Titan enthaltenden Verbindung (a): Sauerstoff enthaltende Verbindung

(d) von 1:0,01 bis 1:2, insbesondere 1:0,08 bis 1:0,5 ergibt, anschließend

(I) die gemäß (H) erhaltene Suspension unter heftiger Bewegung über eine Zeitspanne von 5 bis 120, insbesondere 15 bis 60 Minuten auf einer Temperatur von +40 bis +140, insbesondere +50 bis +95°C hält, dann auf eine Temperatur von +15 bis +25°C bringt, hierauf

(J) — gegebenenfalls — aus der gemäß (I) erhaltenen Suspension den Feststoff abtrennt, gewünschtenfalls mit einem unter Normalbedingungen flüssigen und unterhalb von 150, insbesondere unterhalb von 100°C siedenden Kohlenwasserstoff wäscht sowie trocknet; —

und derart mit dem gemäß (I) erhaltenen, in suspendierter Form oder dem gemäß (J) erhaltenen, in isolierter Form vorliegenden Feststoff die zur Polymerisation einzusetzende Titan-III-Komponente (1) gewinnt.

Zu dem erfindungsgemäßen Verfahren ist im einzelnen das folgende zu bemerken:

Das Polymerisationsverfahren als solches kann — unter Beachtung der kennzeichnenden Besonderheit — in praktisch allen einschlägig üblichen technologischen Ausgestaltungen durchgeführt werden, etwa als diskontinuierliches, taktweises oder kontinuierliches Verfahren. Die erwähnten technologischen Ausgestaltungen — mit anderen Worten: die technologischen Varianten der Gasphasen-Polymerisation von α-Monoolefinen nach Ziegler-Natta — sind aus der Literatur und Praxis wohlbekannt, so daß sich nähere Ausführungen zu ihnen erübrigen.

Der Vollständigkeit halber ist zu erwähnen, daß sich beim erfindungsgemäßen Verfahren auch die Molekulargewichte der Polymerisate durch die einschlägig üblichen Maßnahmen regeln lassen, z.B. mittels Reglern, wie insbesondere Wasserstoff.

Des weiteren ist noch festzuhalten, daß beim erfindungsgemäßen Verfahren die Komponenten des Katalysatorsystems in mannigfacher Weise in die erste Polymerisationszone eingebracht werden können, z.B. (i) die Titan-Komponente (1), die Aluminiumalkyl-Komponente (2) sowie — gegebenenfalls — die weitere Katalysatorkomponente (3) alle örtlich gemeinsam, (ii) die gleichen Komponenten alle örtlich getrennt voneinander, (iii) die Komponente (1) einerseits und ein Gemisch aus den Komponenten (2) und (3) andererseits örtlich getrennt voneinander — was von besonderem Vorteil sein kann —, oder (iiii) ein Gemisch aus den Komponenten (1) und (3) einerseits und die Komponente (2) andererseits örtlich getrennt voneinander.

Was die stoffliche Seite der neuen Titan-III-Komponente (1) des Katalysatorsystems betrifft, ist im einzelnen das folgende zu sagen:

Die als Ausgangsstoff dienenden Titan enthaltenden Verbindungen (a) mit der angegebenen Formel sind die einschlägig üblichen, z.B. solche, wie sie durch Kokristallisation von $TiCl_3$ und $AlCl_3$ oder Reduktion von $TiCl_4$ mittels Aluminium bzw. Gemischen aus Aluminium und Titan erhalten werden können. Besonders gut geeignet sind Kokristallisate der Formel

$$TiCl_3 \cdot \frac{1}{3} AlCl_3.$$

Die in Betracht kommenden Titan enthaltenden Verbindungen (a) sind im Handel erhältlich, so daß sich nähere Ausführungen erübrigen.

Die Elektronendonatoren (b) sind bestimmte Ester ($b_1$) oder bestimmte Phosphor enthaltende Verbindungen ($b_2$).

Im vorliegenden Zusammenhang kommen als Ester ($b_1$) mit der angegebenen Formel die einschlägig üblichen, dieser Formel gehorchenden in Betracht, insbesondere solche, in deren Formel stehen $R^1$ für eine Methyl-, Ethyl-, n-Propyl-, i-Propyl-, n-Butyl-, i-Butyl-, tert.-Butyl-, n-Pentyl-, i-Pentyl-, n-Hexyl- oder Benzyl-Gruppe, $R^2$ für Wasserstoff oder eine Methyl-, Ethyl-, n-Propyl-, i-Propyl-, n-Butyl-, i-Butyl-, tert.-Butyl-, n-Pentyl-, i-Pentyl-, n-Hexyl-, n-Heptyl-, n-Octyl, Phenyl-, Benzyl-, 1-Phenylethyl-, 2-Phenylethyl-, 3-Phenylpropyl-, 4-Phenylbutyl- oder 5-Phenylpentyl-Gruppe.

Namentliche Beispiele für gut geeignete Ester ($b_1$) sind der Essigsäureethylester, Essigsäurebutylester, Propionsäureethylester, n-Buttersäureethylester, n-Valeriansäureethylester, Phenylessigsäureethylester, 3-Phenylpropionsäureethylester, 4-Phenylbuttersäureethylester und Acrylsäurebutylester sowie Methacrylsäurebutylester.

Auch als Phosphor enthaltende Verbindungen ($b_2$) mit der angegebenen Formel kommen die enschlägig üblichen, dieser Formel gehorchenden in Betracht, insbesondere solche, in deren Formel stehen $R^3$ für $R^{3'}$ oder $NR^{3'}_2$ und $R^{3'}$ für einen $C_1$-bis $C_8$-Alkylrest, vor allem einen $C_1$-bis $C_4$-Alkylrest oder einen Phenylrest.

Geeignete Verbindungen dieser Art sind beispielsweise beschrieben in der US-Patentschrift 3 186 977.

Namentliche Beispiele für gut geeignete Phosphor enthaltende Verbindungen sind Triphenylphosphin, Triphenylphosphinoxid, Tri-n-butylphosphin, Tri-n-butylphosphinoxid und Hexamethylphosphorsäuretriamid. Besonders gut geeignet sind Triphenylphosphinoxid und Tri-n-butylphosphin.

Der gleichfalls zu verwendende flüssige Kohlenwasserstoff (c) kann ein Kohlenwasserstoff der Art sein, die üblicherweise mit Titan enthaltenden Komponenten für Katalysatoren des Ziegler-Natta-Typs ohne Schaden für den Katalysator bzw. dessen Titan enthaltende Komponente zusammengebracht werden; — z.B. bei der Polymerisation von α-Monoolefinen. Als Beispiele für geeignete Kohlenwasserstoffe seien genannt: Pentane, Hexane, Heptane, Benzine und Cyclohexan.

Die weiterhin zum Herstellen der Titan-III-Komponente dienende Sauerstoff enthaltende Verbindung (d) kann ein Ether ($d_1$) mit der angegebenen Formel oder ein Ester ($d_2$) mit der angegebenen Formel sein.

Als Ether ($d_1$) kommen dabei wiederum die

einschlägig üblichen, der angegebenen Formel gehorchenden in Betracht, insbesondere solche, in deren Formel $R^5$ bzw. $R^6$ stehen für eine Methyl-, Ethyl-, Propyl-, Butyl-, Amyl-, Hexyl- oder Phenylgruppe. Geeignete Verbindungen dieser Art sind beispielsweise beschrieben in der US-Patentschrift 3 116 274.

Namentliche Beispiele für gut geeignete Ether ($d_1$) sind der Di-n-propyl-, Di-n-butyl-, Di-isopentyl-, Di-n-amyl- und Di-n-hexylether, der Methyl- und Ethylphenylether, sowie vor allem der Di-n-butylether.

Als Ester ($d_2$) kommen ebenfalls die einschlägig üblichen, der angegebenen Formel gehorchenden in Betracht, insbesondere solche, in deren Formel stehen $R^8$ für Wasserstoff oder eine Methyl-, Ethyl-, n-Propyl-, n-Butyl-, n-Pentyl-, i-Pentyl-, n-Hexyl-, n-Heptyl-, n-Octyl-, n-Nonyl-, n-Decyl-, n-Undecyl-, n-Dodecyl-, Phenyl-, Benzyl-, 1-Phenylethyl-, 2-Phenylethyl-, 3-Phenylpropyl-, 4-Phenylbutyl- oder 5-Phenylpentyl-Gruppe und $R^7$ für eine Methyl-, Ethyl-, Propyl-, n-Butyl-, n-Pentyl-, i-Pentyl-, n-Hexyl- oder Benzyl-Gruppe.

Namentliche Beispiele für gut geeignete Ester ($d_2$) sind Capronsäureethylester, Pelargonsäureethylester, sowie Laurinsäureethylester.

Das Herstellen der neuen Titan-III-Komponente (1) ist einfach und für den Fachmann ohne nähere Erläuterungen möglich. Zu erwähnen ist lediglich das Folgende:

Die Maßnahme gemäß (E) sollte zweckmäßigerweise dann durchgeführt werden, wenn eine besonders enge Korngrößenverteilung des Polymerisats gewünscht wird.

Das Durchführen der Maßnahme gemäß (P) bringt im allgemeinen den Effekt, daß — bei etwas verminderter Produktivität des Katalysatorsystems — ein ausgeprägt grobkörniges Polymerisat erhalten wird.

Die Maßnahme gemäß (G) wiederum sollte dann getroffen werden, wenn aus Stufe (F) ein agglomeriertes Produkt anfällt.

Beim Durchführen der Maßnahme gemäß (H), d.h. beim Herstellen der entsprechenden Suspension, hat sich gezeigt, daß es oft günstig ist, wenn man den Feststoff zunächst zusammenbringt mit einer relativ kleinen Menge des Kohlenwasserstoffs und dann die Gesamtmenge der Sauerstoff enthaltenden Verbindung mit der Restmenge des Kohlenwasserstoffs zufügt.

Im Zuge der Durchführung der Maßnahme gemäß (I) ist die Suspension heftig zu bewegen; — was am einfachsten durch Rühren erfolgen kann.

Was nun die anderen Komponenten des im Rahmen der vorliegenden Erfindung einzusetzenden Ziegler-Natta-Katalysatorsystems betrifft, so ist dazu das Nachstehende zu bemerken.

Zur Dialkylaluminiumchlorid-Komponente (2):

Als Dialkylaluminiumchlorid-Komponente kommen die einschlägig üblichen in Betracht; sie sind aus Literatur und Praxis so wohlbekannt, daß auf sie nicht näher eingegangen zu werden braucht. Als herausragender Vertreter sei beispielsweise genannt das Diethylaluminiumchlorid.

Zu den — gegebenenfalls mitzuverwendenden — weiteren Katalysator-Komponenten (3):

Auch hier kommen wiederum die einschlägig üblichen — in den üblichen Mengen — in Betracht; sie sind ebenfalls aus Literatur und Praxis so wohlbekannt, daß auf sie nicht näher eingegangen zu werden braucht.

Hervorzuheben ist jedoch, daß für den erfindungsgemäßen Zweck als weitere Katalysator-Komponenten (3) mit ganz besonderem Erfolg gewisse phenolische Stoffe eingesetzt werden können. Es handelt sich dabei — sowohl qualitativ als auch quantitativ — um die gleichen phenolischen Stoffe wie sie im Rahmen der US-PS 4 260 710 beschrieben sind. Anstelle unnötiger Wiederholungen wird daher diese Patentschrift insoweit zu einem Bestandteil der Offenbarung der vorliegenden Erfindung gemacht.

**Beispiel 1**
**Herstellung der Titan-III-Komponente (1)**

Es wird so verfahren, daß man eine Titan enthaltende Verbindung (a) der Formel $TiCl_3 \cdot 0{,}33\ AlCl_3$ und als Elektronendonator (b) den Phenylessigsäureethylester einer Mahlbehandlung unterzieht, derart, daß man

(A) mit einer Kugelschwingmühle arbeitet, die eine Mahlbeschleunigung von 50 m · $sec^{-2}$ hat,

(B) die Mühle zunächst mit der Titan enthaltenden Verbindung (a) beschickt und bei einer Temperatur von +30°C über ein Zeitspanne von 16 Stunden in Abwesenheit von Verdünnungsmitteln betreibt, dann

(C) unter Mahlen bei einer Temperatur des Mahlgutes von —14°C die einem Molverhältnis Titan in der Titan enthaltenden Verbindung (a): Ester (b) von 1:0,3 entsprechende Menge des Esters (b) mit einer Geschwindigkeit von 15 ml/Min pro 2,5 kg Titan enthaltende Verbindung (a) kontinuierlich und in Abwesenheit von Verdünnungsmitteln zugibt, daraufhin

(D) under Mahlen das Mahlgut über eine Zeitspanne von 50 Stunden auf einer Temperatur von +50°C hält, hierauf

(E) das gemäß (D) erhaltende Produkt über eine Zeitspanne von 20 Minuten bei einer Temperatur von —15°C in Abwesenheit von Verdünnungsmitteln weitervermahlt, sodann

(F) das gemäß (E) erhaltene Produkt ohne es zu mahlen über eine Zeitspanne von 100 Stunden auf einer Temperatur von +55°C hält und danach etwas auflockert,

(G) — entfällt —, dann

(H) eine Suspension herstellt aus

($H_1$) 1 Gew.-Teil des gemäß (F) erhaltenen Produkts,

($H_2$) 1,5 Gew.-Teilen n-Heptan als Kohlenwasserstoff (c) sowie

($H_3$) dem Pelargonsäureethylester als Sauerstoff enthaltender Verbindung (d) in einer solchen

Menge, daß sich ein Molverhältnis Titan aus der Titan enthaltenden Verbindung (a): Sauerstoff enthaltende Verbindung (d) von 1:0,12 ergibt, anschließend

(I) die gemäß H erhaltene Suspension unter heftigem Rühren über eine Zeitspanne von 35 Minuten auf einer Temperatur von +90° C hält, dann auf eine Temperatur von +22° C bringt, hierauf

(J) aus der gemäß (I) erhaltenen Suspension den Feststoff abtrennt, mit n-Heptan wäscht sowie trocknet;- und derart mit dem gemäß (J) erhaltenen, in isolierter Form vorliegenden Feststoff die Titan-III-Komponente (1) gewinnt.

**Polymerisation mittels der Titan-III-Komponente (1)**

In einer einschlägig üblichen Vorrichtung (einer sog. "Kaskade"; vgl. dazu die GB-PS 1,032,945) wird kontinuierlich ein Propylen-Ethylen-Polymerisat vom Typ der sogenannten "Block-Copolymerisate" hergestellt, indem man jeweils in einem bewegten Festbett (einem gerührten konzentrischen Festbett) aus kleinteiligem Polymerisat und in Abwesenheit eines flüssigen Reaktionsmediums aus der Gasphase heraus zunächst

(I) in einer ersten Polymerisationszone mit einem Nutzvolumen von 200 l bei einer Temperatur von 70° C Propylen bei einem Propylen-Druck von 28 bar durch kontinuierliche, getrennt dosierte Zufuhr eines Ziegler-Natta-Katalysatorsystems aus

(1) der oben beschriebenen Titan-III-Komponente (Menge: 15 mmol/h, gerechnet als Titan),

(2) Diethylaluminiumchlorid sowie

(3) n-Octadecyl-ß-(4′-oxy-3′,5′-di-tert.-butylphenyl)-propionat

homopolymerisiert und dann

(II) in einer zweiten Polymerisationszone mit einem Nutzvolumen von 200 l bei einer Temperatur von 50° C ein Gemisch aus Propylen und Ethylen bei einem Propylen-Druck von 7,9 bar und einem Ethylen-Druck (3,1 bar), der einen Gehalt an einpolymerisiertem Ethylen im Gesamtpolymerisat von 9,3 Gewichtsprozent ergibt, durch Zufuhr des in der ersten Polymerisationszone erhaltenen Reaktionsguts dem darin vorliegenden Propylen-Homopolymerisat hinzu polymerisiert,

mit den Maßgaben, daß (i) das Atomverhältnis Titan aus der Titan-III-Komponente (1): Aluminium aus der Dialkylaluminiumchlorid-Komponente (2) 1: 7 und das Molverhältnis Dialkylaluminiumchlorid-Komponente (2): weiteren Katalysatorkomponente (3) — d.h. dem n-Octadecyl-ß-(4′-oxy-3′,5′-di-tert.-butylphenyl)-propionat — 1:0,07 beträgt, (ii) der Gesamtdruck in der ersten Polymerisationszone um 17 bar größer als der Gesamtdruck in der zweiten Polymerisationszone und (iii) in der ersten Polymerisationszone 92,5 Gewichtsprozent des Gesamtpolymerisats (letzteres: 17,3 kg/h) und in der zweiten Polymerisationszone der Rest des Gesamtpolymerisats erzeugt werden. Dieses weist gute morphologische Eigenschaften, insbesondere eine gute Rieselfähigkeit auf.

**Beispiel 2**
**Herstellung der Titan-III-Komponente (1)**

Sie erfolgt in Idendität mit Beispiel 1.

**Polymerisation mittels der Titan-III-Komponente (1)**

In der Vorrichtung aus Beispiel 1 wird kontinuierlich ein Propylen-Ethylen-Polymerisat vom Typ der sogenannten "Block-Copolymerisate" hergestellt, indem man jeweils in einem bewegten Festbett (einem gerührten konzentrischen Festbett) aus kleinteiligem Polymerisat und in Abwesenheit eines flüssigen Reaktionsmediums aus der Gasphase heraus zunächst

(I) in einer ersten Polymerisationszone mit einem Nutzvolumen von 200 l bei einer Temperatur von 85° C Propylen bei einem Propylen-Druck von 32 bar durch kontinuierliche, getrennt dosierte Zufuhr eines Ziegler-Natta-Katalysatorsystems aus

(1) der oben bezeichneten Titan-III-Komponente (Menge: 13,1 mmol/h, gerechnet als Titan),

(2) Diethylaluminiumchlorid sowie

(3) dem Tetra-ester der ß-(4′-Oxy-3′,5′-di-tert.-butylphenyl)-propionsäure mit Pentaerythrit

homopolymerisiert und dann

(II) in einer zweiten Polymerisationszone mit einem Nutzvolumen von 200 l bei einer Temperatur von 50° C ein Gemisch aus Propylen und Ethylen bei einem Propylen-Druck von 10,4 bar und einem Ethylen-Druck (4,6 bar), der einen Gehalt an einpolymerisiertem Ethylen im Gesamtpolymerisat von 8,4 Gewichtsprozent ergibt, durch Zufuhr des in der ersten Polymerisationszone erhaltenen Reaktionsguts dem darin vorliegenden Propylen-Homopolymerisat hinzu polymerisiert,

mit den Maßgaben, daß (i) das Atomverhältnis Titan aus der Titan-III-Komponente (1): Aluminium aus der Dialkylaluminiumchlorid-Komponente (2) 1: 9 und das Molverhältnis Dialkylaluminiumchlorid-Komponente (2): weiterer Katalysatorkomponente (3) — d.h. dem Tetra-ester der ß-(4′-Oxy-3′,5′-di-tert.-butylphenyl)-propionsäure mit Pentaerythrit — 1: 0,025 beträgt, (ii) der Gesamtdruck in der ersten Polymerisationszone um 17 bar größer ist als der Gesamtdruck in der zweiten Polymerisationszone und (iii) in der ersten Polymerisationszone 89,9 Gewichtsprozent des Gesamtpolymerisats (letzteres: 17,8 kg/h) und in der zweiten Polymerisationszone der Rest des Gesamtpolymerisats erzeugt werden. Dieses weist ebenfalls gute morphologische Eigenschaften, insbesondere eine gute Rieselfähigkeit auf.

**Patentanspruch**

Verfahren zum Herstellen von Propylen-Ethylen-Polymerisaten vom Typ der sogenannten "Block-Copolymerisate", wobei man jeweils in einem bewegten Bett aus kleinteiligem Polymerisat und in Abwesenheit eines flüssigen Reaktionsmediums aus der Gasphase heraus zunächst

(I) in einer ersten Polymerisationszone bei einer Temperatur von 60 bis 90°C Propylen bei einem Propylen-Druck von 22 bis 40 bar durch Zufuhr eines Ziegler-Natta-Katalysatorsystems aus

(1) einer Titan-III-Komponente,

(2) einer Dialkylaluminiumchlorid-Komponente mit jeweils 1 bis 8 Kohlenstoffatome aufweisenden Alkylgruppen sowie

(3) — gegebenenfalls — einer weiteren Katalysator-Komponente

homopolymerisiert und dann

(II) in einer zweiten Polymerisationszone bei einer Temperatur von 30 bis 70°C ein Gemisch aus Propylen und Ethylen bei einem Propylen-Druck von 8 bis 20 bar und einem Ethylen-Druck, der einen Gehalt an einpolymerisiertem Ethylen im Gesamtpolymerisat von 1 bis 30 Gewichtsprozent ergibt, durch Zufuhr des in der ersten Polymerisationszone erhaltenen Reaktionsguts dem darin vorliegenden Propylen-Homopolymerisat hinzu polymerisiert,

mit den Maßgaben, daß (i) das Atomverhältnis Titan aus der Titan-III-Komponente (1): Aluminium aus der Dialkylaluminiumchlorid-Komponente (2) im Bereich von 1:1 bis 1:20 liegt, (ii) der Gesamt-Druck in der ersten Polymerisationszone um 2 bis 35 bar größer ist als der Gesamt-Druck in der zweiten Polymerisationszone und (iii) in der ersten Polymerisationszone 60 bis 99 Gewichtsprozent und in der zweiten Polymerisationszone der Rest des Gesamtpolymerisats erzeugt werden, dadurch gekennzeichnet, daß im Ziegler-Natta-Katalysatorsystem eine Titan-III-Komponente (1) eingesetzt wird, zu deren Herstellung man

(1.1) eine Titan enthaltende Verbindung (a) der Formel

$TiCl_3 \cdot nAlCl_3$,

worin n für eine Zahl im Bereich von 0,01 bis 1 steht, und

(1.2) einen Elektronendonator (b), bestehend aus

($b_1$) einem Ester, der insgesamt 2 bis 34 Kohlenstoffatome enthält und die Formel

$R^1\text{-O-CO-}R^2$ oder

$$R^1\text{-O-CO-}\underset{R^2}{C}=\underset{R^2}{CH}$$

hat, worin stehen

$R^1$ für (I) eine 1 bis 16 Kohlenstoffatome aufweisenden Alkylgruppe oder (II) eine insgesamt 7 bis 23 Kohlenstoffatome aufweisende Phenylalkylgruppe, wobei bis zu 5 Wasserstoffatome des Phenylrests durch 1 bis 4 Kohlenstoffatome aufweisende Alkylgruppen substituiert sein können,

$R^2$ für (I) Wasserstoff, (II) eine 1 bis 18 Kohlenstoffatome aufweisende Alkylgruppe, (III) eine insgesamt 7 bis 23 Kohlenstoffatome aufweisende Phenylalkylgruppe, wobei bis zu 5 Wasserstoffatome des Phenylrests durch 1 bis 4 Kohlenstoffatome aufweisende Alkylgruppen substituiert sein können, (IV) eine Phenylgruppe oder (V) eine insgesamt 7 bis 23 Kohlenstoffatome aufweisende Alkylphenylgruppe, wobei bis zu 5 Wasserstoffatome des Phenylrests durch 1 bis 4 Kohlenstoffatome aufweisende Alkylgruppen subsituiert sein können, oder

($b_2$) einer Phospor enthaltenden Verbindung der Formel

$O_mPR^3_3$,

worin stehen

m für 0 oder 1,

$R^3$ für $R^4$, $OR^4$ oder $NR^4_2$ und

$R^4$ für einen nicht mehr als 24 Kohlenstoffatome aufweisenden Alkyl-, Aryl-, Alkaryl- oder Aralkylrest,

einer Mahlbehandlung unterzieht, derart, daß man

(A) mit einer Kugelschwingmühle arbeitet, die eine Mahlbeschleunigung von 30 bis 80 m · $sec^{-2}$ hat,

(B) die Mühle zunächst mit der Titan enthaltenden Verbindung (a) beschickt und — gegebenenfalls — bei einer Temperatur von —50 bis +100°C eine Zeitspanne von 0,5 bis 100 Stunden in Abwesenheit von Verdünnungsmitteln betreibt, dann

(C) unter Mahlen bei einer Temperatur des Mahlgutes von —50 bis +80°C die einem Molverhältnis Titan in der Titan enthaltenden Verbindung (a): Elektronendonator (b) von 1:0,01 bis 1:1,5 entsprechende Menge des Elektronendonators (b) mit einer Geschwindigkeit von 0,01 bis 200 ml/Min pro 2,5 kg Titan enthaltende Verbindung (a) kontinuierlich oder in kleinen Portionen und in Abwesenheit von Verdünnungsmitteln zugibt, daraufhin

(D) unter Mahlen das Mahlgut über eine Zeitspanne von 1 bis 120 Stunden auf einer Temperatur von +15 bis +100°C hält, hierauf

(E) — gegebenenfalls — das gemäß (D) erhaltene Produkt über eine Zeitspanne von 0,5 bis 60 Minuten bei einer Temperatur von —50 bis +5°C inAbwesenheit von Verdünnungsmitteln weitervermahlt, sodann

(F) — gegebenenfalls und vorteilhafterweise — das gemäß (D) oder (E) erhaltene Produkt ohne es zu mahlen über eine Zeitspanne von 0,25 bis 300 Std. auf einer Temperatur von +20 bis +150°C hält, danach

(G) — gegebenenfalls — das gemäß (F) erhaltene Produkt über eine Zeitspanne von 0,5 bis 60 Minuten bei einer Temperatur von —50 bis +5°C in Abwesenheit von Verdünnungsmitteln nachvermahlt, dann

(H) eine Suspension herstellt aus

($H_1$) 1 Gew.-Teil des gemäß (D), (E), (F) oder (G) erhaltenen Produkts,

($H_2$) 0,5 bis 20 Gew.-Teilen eines unter Normalbedingungen flüssigen und unterhalb von 150°C siedenden Kohlenwasserstoffs (c), sowie

($H_3$) einer Sauerstoff enthaltenden Verbindung (d), bestehend aus

($d_1$) einem Ether, der insgesamt 4 bis 30 Kohlenstoffatome enthält und die Formel

$R^5\text{-O-}R^6$

hat, worin $R^5$ und $R^6$ gleich oder verschieden sind und stehen für (I) eine 1 bis 15 Kohlenstoffatome

aufweisende Alkylgruppe, (II) eine Phenylgruppe oder (III) eine insgesamt 7 bis 14 Kohlenstoffatome aufweisende Alkylphenylgruppe, und/oder

($d_2$) einem Ester, der insgesamt 2 bis 34 Kohlenstoffatome enthält und die Formel

$R^7$-O-CO-$R^8$ bzw.
$R^7$-O-CO-C=CH
$\acute{R}^8\acute{R}^8$

hat, worin stehen

$R^7$ für (I) eine 1 bis 8 Kohlenstoffatome aufweisende Alkylgruppe, (II) eine Phenylgruppe oder (III) eine insgesamt 7 bis 14 Kohlenstoffatome aufweisende Phenylalkylgruppe,

$R^8$ für (I) Wasserstoff, (II) eine 1 bis 12 Kohlenstoffatome aufweisende Alkylgruppe, (III) eine insgesamt 7 bis 14 Kohlenstoffatome aufweisende Phenylalkylgruppe, wobei 1 Wasserstoffatom des Phenylrests durch eine Alkylgruppe substituiert sein kann, (IV) eine Phenylgruppe oder (V) eine insgesamt 7 bis 14 Kohlenstoffatome aufweisende Alkylgruppe,

in einer solchen Menge, daß sich ein Molverhältnis Titan aus der Titan enthaltenden Verbindung (a): Sauerstoff enthaltende Verbindung (d) von 1:0,01 bis 1:2 ergibt, anschließend

(I) die gemäß (H) erhaltene Suspension unter heftiger Bewegung über eine Zeitspanne von 5 bis 120 Minuten auf einer Temperatur von +40 bis +140°C hält, dann auf eine Temperatur von +15 bis +25°C bringt, hierauf

(J) — gegebenenfalls — aus der gemäß (I) erhaltenen Suspension den Feststoff abtrennt, gewün schtenfalls mit einem unter Normalbedingungen flüssigen und unterhalb von 150°C siedenden Kohlenwasserstoff wäscht sowie trocknet; —

und derart mit dem gemäß (I) erhaltenen, in suspendierter Form oder dem gemäß (J) erhaltenen, in isolierter Form vorliegenden Feststoff die zur Polymerisation einzusetzende Titan-III-Komponente (1) gewinnt.

**Claim**

A process for the preparation of a propylene/ethylene block copolymer, in which, in each case in an agitated bed consisting of small polymer particles and in the absence of a Liquid reaction medium, first

(I) propylene, at from 22 to 40 bar is homopolymerized, from the gas phase, in a first polymerization zone at from 60 to 90°C by feeding in a Ziegler-Natta catalyst comprising

(1) a titanium(III) component and

(2) a dialkyl-aluminum chloride component where each alkyl is of 1 to 8 carbon atoms, with or without

(3) a further catalyst component, and then

(II) the product obtained in the first polymerization zone is fed into a second polymerization zone at from 30 to 70°C, where a mixture of propylene and ethylene, at a propylene pressure of from 8 to 20 bar and such an ethylene pressure that a content of from 1 to 30 per cent by weight of copolymerized ethylene units in the total polymer is obtained, is polymerized with the propylene homopolymer present in the product from the first polymerization zone, with the provisos that (i) the atomic ratio of titanium from the titanium(III) component (1) to aluminum from the dialkyl-aluminum chloride component (2) is from 1:1 to 1:20, (ii) the total pressure in the first polymerization zone is 2—35 bar higher than that in the second polymerization zone, and (iii) from 60 to 99 per cent by weight of the total polymer is produced in the first polymerization zone, and the remainder there of in the second polymerization zone, wherein the Ziegler-Natta catalyst employed contains a titanium(III) component (1) which is prepared by subjecting

(1.1) a titanium-containing compound (a) of the formula

$TiCl_3 \cdot nAlCl_3$

where n is from 0.01 to 1, and

(1.2) an electron donor (b), consisting of ($b_1$) an ester which contains a total of 2 to 34 carbon atoms and is of the formula

$R^1$-O-CO-$R^2$ or
$R^1$-O-CO-C=CH
$\acute{R}^2\acute{R}^2$

where $R^1$ is (I) alkyl of 1 to 16 carbon atoms or (II) phenylalkyl containing a total of 7 to 23 carbon atoms, and not more than 5 hydrogen atoms of the phenyl radical may be substituted by alkyl of 1 to 4 carbon atoms, and $R^2$ is (I) hydrogen, (II) alkyl of 1 to 18 carbon atoms, (III) phenylalkyl containing a total of 7 to 23 carbon atoms, and not more than 5 hydrogen atoms of the phenyl radical may be substituted by alkyl of 1 to 4 carbon atoms, (IV) phenyl or (V) alkylphenyl containing a total of 7 to 23 carbon atoms, and not more than 5 hydrogen atoms of the phenyl radical may be substituted by alkyl of 1 to 4 carbon atoms, or

($b_2$) a phosphorus-containing compound of the formula

$O_mPR^3_3$,

where m is O or 1, $R^3$ is $R^4$, $OR^4$ or $NR^4_2$ and $R^4$ is an alkyl, aryl, alkaryl or aralkyl radical of no more than 24 carbon atoms,

to a milling procedure in which

(A) a vibratory ball mill with an acceleration of from 30 to 80 m · $sec^{-2}$ is employed,

(B) the mill is first charged with the titanium-containing compound (a) and, if desired, is operated at from −50 to +100°C for from 0.5 to 100 hours in the absence of a diluent,

(C) an amount of electron donor (b) which corresponds to a molar ratio of titanium in the titanium-containing compound (a) to electron donor (b) of from 1:0.01 to 1:1.5 is then added at a rate of from 0.01 to 200 ml/min per 2.5 kg of titanium-containing compound (a), either continuously or a little at a time, in the absence of a diluent, and while milling the material at from −50 to +80°C,

(D) the material is thereafter kept at from +15 to +100°C for from 1 to 120 hours, while milling is

continued,

(E) if desired, the product obtained in (D) is then milled further for from 0.5 to 60 minutes at from −50 to +5°C in the absence of a diluent,

(F) if desired and advantageously, the product obtained in (D) or (E) is then kept at from +20 to +150°C for from 0.25 to 300 hours, without subjecting it to milling,

(G) if desired, the product obtained in (F) is thereafter milled further for from 0.5 to 60 minutes at from −50 to +5°C in the absence of a diluent, thereafter

(H) a suspension is prepared from

($H_1$) 1 part by weight of the product obtained in (D), (E), (F) or (G),

($H_2$) from 0.5 to 20 parts by weight of a hydrocarbon (c) which is liquid under standard conditions of temperature and pressure and boils at below 150°C, and

($H_3$) an oxygen-containing compound (d), consisting of

($d_1$) an ether which contains a total of 4 to 30 carbon atoms and is of the formula

$R^5$-O-$R^6$

where $R^5$ and $R^6$ are identical or different and are each (I) alkyl of 1 to 15 carbon atoms, (II) phenyl or (III) alkylphenyl containing a total of 7 to 14 carbon atoms, and/or

($d_2$) an ester which contains a total of 2 to 34 carbon atoms and is of the formula

$R^7$-O-CO-$R^8$ or
$R^7$-O-CO-C=CH
$\quad\quad\quad\quad R^8 R^8$

where

$R^7$ is (I) alkyl of 1 to 8 carbon atoms, (II) phenyl or (III) phenylalkyl containing a total of 7 to 14 carbon atoms, and

$R^8$ is (I) hydrogen, (II) alkyl of 1 to 12 carbon atoms, (III) phenylalkyl containing a total of 7 to 14 carbon atoms, 1 hydrogen atom of the phenyl radical being optionally substituted by alkyl, (IV) phenyl or (V) alkyl containing a total of 7 to 14 carbon atoms,

in such an amount that the molar ratio of titanium from the titanium-containing compound (a) to oxygen-containing compound (d) is from 1:0.01 to 1:2

(I) the suspension obtained in (H) is then kept at from +40 to +140°C for from 5 to 120 minutes, while subjecting it to vigorous agitation, and thereafter brought to from +15 to +25°C, and

(J) if desired, the solid is then isolated from the suspension obtained in (I), and optionally washed with a hydrocarbon which is liquid under standard conditions of temperature and pressure and boils at below 150°C, and dried;

and the titanium(III) component (1) to be employed for the polymerization is thus obtained either as the suspended solid produced in (I) or as the solid isolated in (J).

**Revendication**

Procédé de préparation de polymères de l'éthylène et du propylène du type dit "copolymères à blocs", dans lequel on procède, en phase gazeuse et en l'absence d'un milieu réactionnel liquide, dans un lit fluidisé de polymérisat en fines particules:

(I) dans une première zone de polymérisation à une homo-polymérisation du propylène à une température de 60 à 90°C et sous une pression de propylène de 22 à 40 bars par introduction d'un système catalytique selon Ziegler-Natta, constitué de

(1) un composant au titane trivalent,

(2) un composant chlorure de dialkyl-aluminium avec des radicaux alkyle en $C_1$ à $C_8$ et éventuellement de

(3) un composant catalytique supplémentaire, puis

II) dans une deuxième zone de polymérisation à une copolymérisation d'un mélange de propylène et d'éthylène, à une température de 30 à 70°C et sous une pression de propylène de 8 à 20 bars et une pression d'ethylène conduisant à une teneur du polymère final en éthylène copolymérisé de 1 à 30 % en poids, avec l'homopolymérisat du propylène contenu dans le mélange réactionnel provenant de la première zone de polymérisation, avec les mesures et conditions ci-après:

(i) le rapport atomique entre le titane du composant au titane trivalent (1) et l'aluminium du composant chlorure de dialkyl-aluminium (2) est compris dans la gamme de 1:1 à 1:20;

(ii) la pression globale dans la première zone de polymérisation est supérieure de 2 à 35 bars à la pression globale dans la deuxième zone de polymérisation et

(iii) le polymère final est produit à raison de 60 à 99 % en poids dans la première zone de polymérisation, la proportion restante étant produite dans la deuxième zone de polymérisation,

caractérisé en ce que le système catalytique de Ziegler-Natta contient un composant au titane trivalent (1), préparé en soumettant

(1.1) un dérivé du titane (a) de la formule

$TiCl_3 \cdot n \; AlCl_3$,

dans laquelle n est un nombre valant de 0,01 à 1,

et

(1.2) un donneur d'électrons (b), qui est soit ($b_1$) un ester en $C_2$ à $C_{34}$ de l'une des formules

$R^1$-O-CO-$R^2$ ou $R^1$-O-CO-C=CH,
$\quad\quad\quad\quad R^2 R^2$

dans lesquelles

$R^1$ désigne (I) un groupe alkyle en $C_1$ à $C_{16}$ ou (II) un groupe phényl-alkyle avec 7 à 23 atomes de carbone au total, jusqu'à cinq atomes d'hydrogène du noyau phényle pouvant être remplacés par des radicaux alkyle en $C_1$ à $C_4$,

et

$R_2$ désigne (I) un atome d'hydrogène; (II) un radical alkyle en $C_1$ à $C_{18}$; (III) un groupe phényl-alkyle avec 7 à 23 atomes de carbone au total, jusqu'à cinq atomes d'hydrogène du noyau phényle

pouvant être remplacés par des radicaux alkyle en $C_1$ à $C_4$; (IV) un groupe phényle ou (V) un groupe alkyl-phényle avec 7 à 23 atomes de carbone au total, jusqu'à cinq atomes d'hydrogène du noyau phényle pouvant être remplacés par des radicaux alkyle en $C_1$ à $C_4$; soit

($b_2$) un composé contenant du phosphore de la formule

$O_mPR^3_3$,

dans laquelle

m vaut 0 ou 1 et

$R^3 = R^4$, $OR^4$, où $NR^4_2$, où

$R^4$ désigne un groupe alkyle, aryle, alcaryle ou aralkyle avec au maximum 24 atomes de carbone, à des opérations de broyage, consistant à:

(A) travailler dans un broyeur à boulets oscillant, permettant de réaliser des accélérations de broyage de 30 à 80 $m.s.^{-2}$;

(B) introduire d'abord dans le broyeur le composé au titane (a) et traiter celui-ci le cas échéant pendant 0,5 à 100 heures, en l'absence d'un diluant, à une température comprise entre −50 et + 100°C;

(C) ajouter à la matière en cours de broyage, à une température comprise entre −50 et + 80°C et en poursuivant le broyage, toujours en l'absence d'un diluant, à raison de 0,01 à 200 ml/mn pour 2,5 kg de composé au titane (a), le donneur d'électrons (b) en une quantité telle que le rapport molaire du composé au titane (a) au donneur d'électrons (b) se situe entre 1:0,01 et 1:1,5, en continu ou par petites portions;

(D) maintenir la matière en cours de broyage, en poursuivant le broyage, pendant 1 à 120 heures entre +15 et +100°C;

(E) poursuivre, le cas échéant, le broyage du produit obtenu sub (D), toujours en l'absence d'un solvant, pendant 0,5 à 60 minutes entre −50 et +5°C;

(F) maintenir éventuellement et avantageusement le produit obtenu sub (D) ou sub (E), sans broyage, pendant 0,25 à 300 heures entre +20 et +150°C;

(G) soumettre éventuellement le produit obtenu sub (F) pendant 0,5 à 60 minutes à un post-broyage en l'absence de diluant entre −50 et +5°C;

(H) préparer une suspension de

($H_1$) 1 partie en poids du produit obtenu sub (D), (E), (F) ou (G),

($H_2$) 0,5 à 20 parties en poids d'un hydrocarbure (c), liquide dans les conditions normales et avec un point d'ébullition inférieur à 150°C,

et

($H_3$) un composé contenant de l'oxygène (d), choisi parmi

($d_1$) un éther avec au total 4 à 30 atomes de carbone, de la formule

$R^5$-O-$R^6$,

dans laquelle $R^5$ et $R^6$, qui peuvent être identiques ou différents, désignent chacun (I) un groupe alkyle en $C_1$ à $C_{15}$, (II) un groupe phényle ou (III) un groupe alkyl-phényle avec 7 à 14 atomes de carbone au total et (ou)

($d_2$) un ester avec au total 2 à 34 atomes de carbone, de l'une des formules

$R^7$-0-CO-$R^8$ ou $R^7$-0-CO-C=CH,
$R^8$ $R^8$

dans lesquelles

$R^7$ désigne (I) un groupe alkyle en $C_1$ à $C_8$, (II) un groupe phényle ou (III) un groupe phényl-alkyle avec 7 à 14 atomes de carbone au total et

$R^8$ représente (I) un atome d'hydrogène, (II) un groupe alkyle en $C_1$ à $C_{12}$, (III) un groupe phényl-alkyle avec au total 7 à 14 atomes de carbone, un atome d'hydrogène du noyau phényle pouvant être remplacé par un radical alkyle, (IV) un groupe phényle ou (V) un groupe alkyle en $C_7$ à $C_{14}$,

de façon à réaliser un rapport molaire du composé au titane (a) au composé à l'oxygène (d) compris entre 1:0,01 et 1:2;

(I) maintenir la suspension préparée sub (H) pendant 5 à 120 minutes, sous une agitation vigoureuse, entre +40 et +140°C, puis abaisser la température entre +15 et +25°C;

(J) séparer, le cas echéant, le produit solide de la suspension obtenue sub (I) et, si on le souhaite, le laver avec un hydrocarbure liquide dans les conditions normales et possédant un point d'ébullition inférieur à 150°C, puis le sécher:

le produit solide isolé sub (J) ou en suspension selon (I) constituant le composant au titane trivalent (1) à mettre en oeuvre pour la polymérisation.